# EUROPÄISCHE PATENTANMELDUNG

(11) **EP 1 330 067 A2**
(43) Veröffentlichungstag der Anmeldung: **23.07.2003**
(21) Anmeldenummer: 03000320.6
(22) Anmeldetag: 09.01.2003
(51) Int. Cl.: H04L 9/30, G06F 17/60

(54) **Verfahren zur Bereitstellung von Diensten eines Diensteanbieters**

(30) Priorität: 16.01.2002 DE 10203471
(71) Anmelder: ROBERT BOSCH GMBH, 70442 Stuttgart (DE)
(72) Erfinder: Friedrichs, Arne, 38100 Braunschweig (DE); Draeger, Gerd, 38102 Braunschweig (DE); Detlefsen, Wolfgang, 31141 Hildesheim (DE); Goss, Stefan, 31137 Hildesheim (DE); Skwarek, Volker, 31162 Bad Salzdetfurth (DE)

(57) **Zusammenfassung**

Zur Bereitstellung von Diensten eines Diensteanbieters (SP) sendet ein Nutzer (D) eine Diensteanfrage (1). Daraufhin erhält er ein Diensteangebot (2), das er bei Akzeptanz mit einer Zahlungsanweisung bestätigt, die eine digitale Signatur enthält. Die Zahlungsanweisung wird vom Diensteanbieter (SP) an einen Diensteabrechner (BP) zur Überprüfung weitergeleitet. Auf dessen Rückmeldung hin wird der angeforderte Dienst dem Nutzer (D) zur Verfügung gestellt.

## Beschreibung

### Stand der Technik

Bekannt sind sogenannte Telematikdienste, bei denen man z.B. vom fahrenden Auto aus, via GSM einen bestimmten Dienst bei einem Provider (Telematikdiensteanbieter) anfragen kann. Z.B. nutzen sogenannte Offboard-Navigationsgeräte Telematikdienste, da sie bei einem Anbieter bestimmte Ziele wie Restaurants, nächste Tankstelle oder ganze Routen etc. anfragen und auswerten können. Bei all diesen Anfragen werden teils geheime und sensible Daten wie beispielsweise Nutzernummer, Abrechnungsauthentifizierung vom Nutzer an den Diensteanbieter (Service Provider) übertragen, da die Provider in der Regel die Berechtigung des Nutzers überprüfen möchten. Solche sensiblen Daten werden z.B. nach bekannten Verfahren (RSA, DSA, DES, etc.) mit einer eindeutigen digitalen Signatur versehen, wodurch der Diensteabrechner (Billing Provider) erkennen kann, dass eine Anfrage wirklich genau von dem Benutzer stammt.

In der älteren Anmeldung DE 101 512 78.3 ist ein Verfahren beschrieben, das eine sichere Abrechnung zwischen Endgerät und Billing Provider ermöglicht, ohne dass diese Partner direkt miteinander kommunizieren. Für die Durchführung dieses Verfahrens sind jedoch zwei Kommunikationsschritte mit dem Billing Provider notwendig. Die Datensätze werden dort vollständig verschlüsselt.

### Vorteile der Erfindung

Mit den Merkmalen des Anspruchs 1 wird ein Verfahren zur flexiblen Nutzung von Telematikdiensten aus einem Verbund von Diensteanbietern und Diensteabrechnern aufgezeigt sowie deren manipulationssichere Abrechnung in öffentlichen Netzen wie z.B. dem Internet, wobei dieses Verfahren den Kommunikationsaufwand und Ressourcenbedarf für den Nutzer beziehungsweise das den Dienst nutzende mobile Endgerät minimiert.

Der Kern des erfindungsgemäßen Verfahrens besteht zum einen in der Ermächtigung des Diensteanbieters zur Abrechnung von in Anspruch genommenen Leistungen durch den Nutzer / das Endgerät mittels digitaler Signierung durch den Nutzer, derart, dass die Bezahlung weder durch den Nutzer, noch vom Diensteanbieter sowie Dritten manipuliert werden kann. Im Vergleich zum Verfahren gemäß DE 101 51278.3 ist hierzu weder eine zusätzliche Kommunikation zwischen Nutzer /Endgerät und Diensteanbieter noch ein direktes Vertragsverhältnis zwischen Nutzer und Diensteanbieter nötig. Stattdessen besteht das Vertragsverhältnis zwischen Nutzer und Diensteabrechner sowie zwischen Diensteanbieter und Diensteabrechner.

Folgende Vorteile weist das erfindergemäße Verfahren auf:
- Manipulationssicherheit durch digitale Signatur,
- geringer benötigter Verschlüsselungsaufwand,
- Kostenoptimierung, da keine zusätzliche Kommunikation zwischen Nutzer und Diensteabrechner notwendig ist,
- unabhängig vom verwendeten Abrechnungsverfahren,
- der Diensteanbieter kann zustandslos gestaltet sein, d.h., er muss keine nutzerspezifischen Daten vorhalten,
- flexible Preismodellierung für Dienstenutzung möglich.

In einer vorteilhaften Ausgestaltung kann vom Diensteanbieter ein sogenanntes Ticket übermittelt werden zur variablen Diensteausgestaltung (Diensteprofil) und/oder zur variablen Abrechnung für Folgeanfragen, z.B. bei Rabattgewährung .

### Zeichnungen

Anhand der Zeichnungen werden vorteilhafte Ausführungsbeispiele der Erfindung erläutert. Es zeigen:
Figur 1 einen Ablauf einer Diensteanfrage mit Zahlungsanweisung,
Figur 2 den Ablauf einer Folgeanfrage mit Ticket,
Figur 3 den Ablauf einer kostenpflichtigen Offboard-Navigations-Anfrage,
Figur 4 eine kostenfreie Offboard-Navigations-Folgeanfrage und
Figur 5 eine ermäßigte Offboard-Navigations-Folgeanfrage.

### Beschreibung von Ausführungsbeispielen

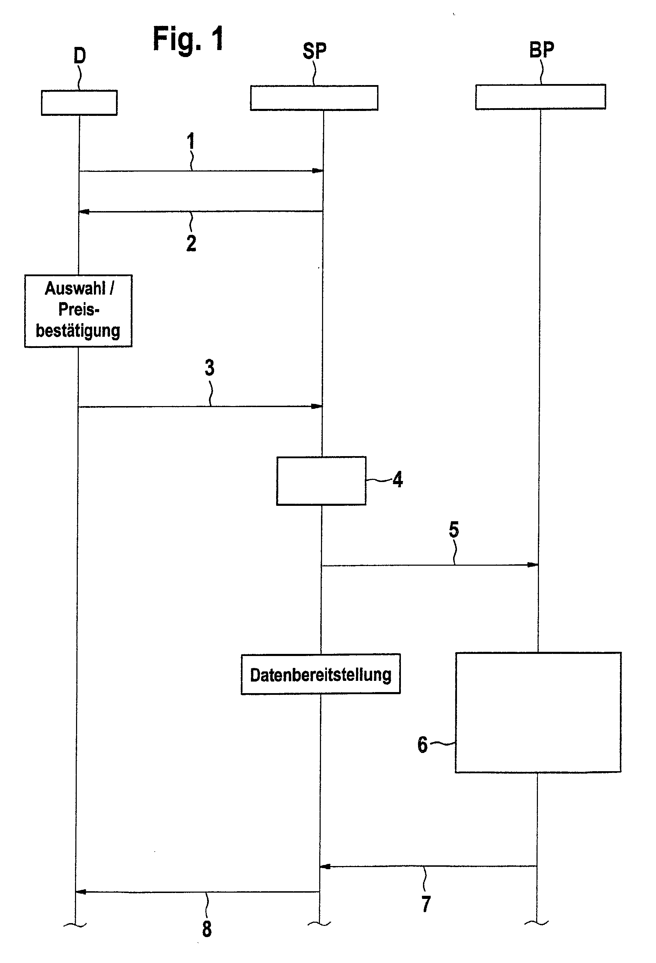

An dem erfindungsgemäßen Verfahren sind, wie Figur 1 zeigt, drei Parteien beteiligt:
- der Nutzer D mit seinem im Allgemeinen mobilen Endgerät (Device),
- ein Diensteanbieter (Service Provider) SP mit systemweit eindeutiger Kennung SPID und
- ein Diensteabrechner (Billing Provider) BP mit systemweit eindeutiger Kennung BPID, wobei der Diensteabrechner nicht zwangsläufig vom Diensteanbieter verschieden sein muss.

Der Diensteanbieter SP muss zwar dem Nutzer D beziehungsweise dem Endgerät bekannt sein, andersherum ist die Kenntnis des Nutzers, insbesondere Vertragsschließung, beim Telematikdiensteanbieter nicht notwendig. Einzige Voraussetzung ist, dass der angesprochene Diensteabrechner (Billing Provider) mit dem angefragten Diensteanbieter kooperiert.

Für die digitale Signierung im Endgerät wird ein Schlüsselpaar, insbesondere für asymmetrische Verschlüsselung (KEYₚᵣᵢᵥₐₜ, KEY_{public}) benötigt. Dieses wird vorzugsweise im Endgerät selbst generiert und der öffentliche Schlüssel KEY_{public} daraufhin über einen Kanal, der die Authentizität gewährleistet, an den Diensteabrechner gesandt. Zusätzlich besteht die Möglichkeit, eine Gültigkeitsbeschränkung, z.B. Zeitdauer, Anzahl Buchungen oder Maximalbetrag, zu vereinbaren. Umgekehrte Verfahren, bei denen der Diensteabrechner solche Schlüssel berechnet, und dem Anwender / Nutzer zusendet, sind ebenso realisierbar.

Möchte der Nutzer einen Dienst in Anspruch nehmen, sendet sein Endgerät eine Diensteanfrage 1 an einen geeigneten Diensteanbieter SP, wobei diese Anfrage weitere Parameter, wie z.B. die geografische Position des Nutzers beinhalten kann. Der Diensteanbieter antwortet dann mit einem Diensteangebot 2, das unter anderem den Preis der Dienstenutzung und seine eindeutige Kennung SPID enthält.

Nach einer eventuellen Preisbestätigung durch den Nutzer folgt nun die bestätigte Diensteanfrage 3 mit Zahlungsanweisung (Scheck), die folgende Informationen enthält:
- eindeutige Nutzerkennung UID,
- den Preis (Cost),
- die Diensteanbieterkennung SPID,
- eine Auftragskennung, z.B. in Form einer Auftragsnummer, vorzugsweise Zeitstempel TS,
- optional weitere Anfrageparameter,
- Nutzerkennung, Preis Diensteanbieterkennung und Anfragenummer werden digital signiert, z.B. Signatur = {digest (UID, Cost, SPID, TS)} KEY_{UID,privat}.

Optional kann die Diensteanbieterkennung eingespart werden, wenn Diensteanbieter und Diensteabrechner identisch sind.

Die Bedeutung dieser Zahlungsanweisung (Scheck) ist die Zahlung eines Betrages Cost von UID (bezahlt den Betrag Cost) an SPID (Empfänger des Betrages Cost) versehen mit einer Auftragsnummer. Da nur die Signatur das Ergebnis einer Verschlüsselung ist und der Rest der Nachricht im Klartext vorliegt, kann der Diensteanbieter überprüfen, ob die Zahlungsanweisung den richtigen Betrag und Empfänger SPID trägt (4) und reicht ihn an den Diensteabrechner weiter (5).

Während oder bevor der Diensteanbieter die Daten bereitstellt, überprüft der Diensteabrechner die Echtheit der Zahlungsanweisung (6), d.h., ob die digitale Signatur echt ist und von UID stammt (Dechiffrierung der Signatur mit öffentlichem Schlüssel des Nutzers) und ob bereits eine Zahlungsanweisung vom selben Nutzer mit der gleichen Auftragsnummer eingereicht wurde. Vorzugsweise wird als Auftragsnummer Zeit und Datum der Erstellung gewählt und in einer vorteilhaften Weiterentwicklung eine Gültigkeitsdauer vereinbart, z.B. eine Stunde, so dass der Diensteabrechner die eingereichte Zahlungsanweisung nur für diese Gültigkeitsdauer zur Duplikatprüfung vorhalten muss.

Im positiven Fall erfolgt eine Rückmeldung über die erfolgte Buchung (7) des angewiesenen Betrags an den Diensteanbieter, der daraufhin die gewünschten Informationen an den Nutzer übermittelt (Dienste-Inhalte 8). Sonst erfolgt eine entsprechende negative Meldung.

Diese Informationen können in vorteilhafter Weise für eine vorgegebene Zeit beim Diensteanbieter SP zwischengespeichert werden, so dass, falls die Daten nicht korrekt beim Nutzer angekommen sind, z.B. im Falle eines Übertragungsfehlers, dieser die zuletzt angeforderten Daten mit einer speziellen Anfrage kostenfrei nochmals anfordern kann.

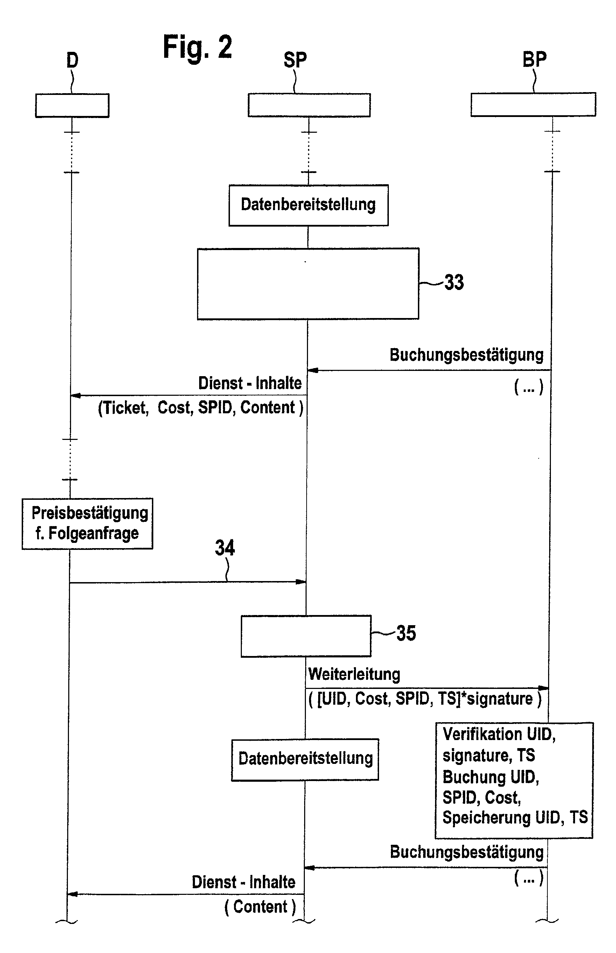

In die Antwort an den Nutzer wird der Diensteanbieter vorzugsweise ein sogenanntes Ticket 33 einsetzen, welches das Endgerät des Nutzers bei Folgeanfragen 34 mit zurückschickt und dem Nutzer so eine ermäßigte Dienstenutzung ermöglicht, ohne dass der Diensteanbieter diese Daten zwischenspeichern muss (vergleiche Ablauf gemäß Figur 2). Dieses Ticket beinhaltet vorzugsweise die Kundennummer des Nutzers UID, den Ermäßigungspreis, sowie eine Gültigkeitsbeschränkung, z.B. Zeitpunkt, und weitere Diensteparameter und wird vom Diensteanbieter verschlüsselt, so dass nur er die Daten erzeugen und lesen kann: bei einer erneuten Diensteanfrage (ermäßigte Folgeanfrage 34) von einem Endgerät kann der Diensteanbieter anhand dieses Tickets die Gültigkeit des Ermäßigungspreises kontrollieren (35) und kann so ein flexibles Preismodell für die Dienstenutzung bereitstellen.

Optional kann dieses Ticket anstelle der Verschlüsselung auch auf eine andere Weise gegen Manipulation geschützt werden. Dazu gehören z.B. Übermittlung des Tickets im Klartext mit Signatur oder auch die Übertragung der Ticketkennung, unter der das Ticket bei dem Diensteanbieter abgelegt ist.

Nachfolgend werden konkrete Ausführungsbeispiele für das erfindergemäße Verfahren vorgestellt.

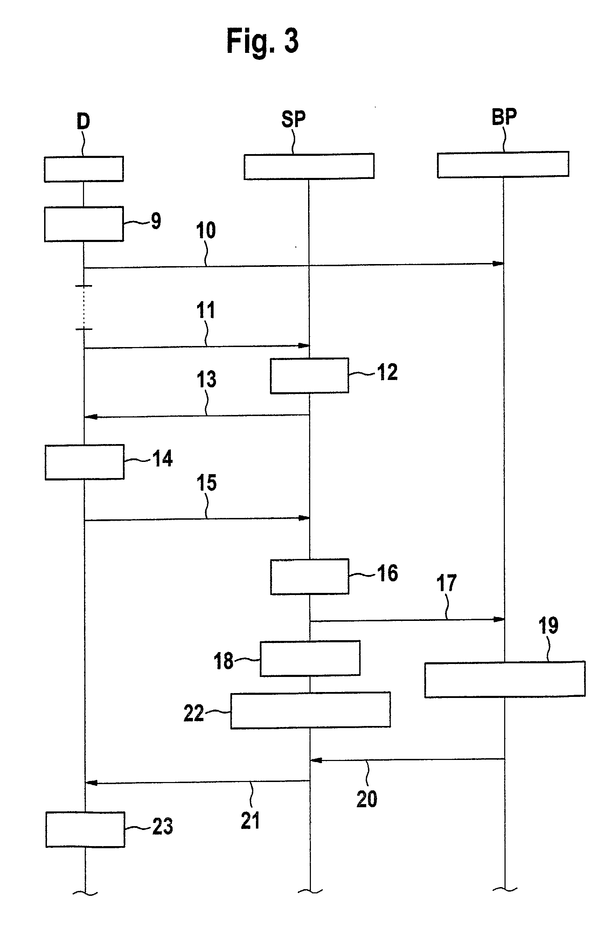

Der Besitzer eines Offboard-Navigationsgerätes will zum ersten Mal den Navigationsdienst in Anspruch nehmen (vergleiche Figur 3). Das Gerät erzeugt hierzu zunächst ein für die Signatur benötigtes Schlüsselpaar 9, speichert den privaten Schlüssel (public key), der unter geeigneten Zufriffsmechanismen geschützt ist im Gerät D und sendet (10) den öffentlichen Schlüssel über einen geeigneten Kanal an den Diensteabrechner BP.

Der Nutzer steht in Hameln und gibt nun sein gewünschtes Ziel, z.B. "Brauns, Bahnhof" ein, welches zusammen mit der Startposition als Koordinate an den Diensteanbieter übermittelt wird (11). Der Diensteanbieter referenziert (12) diese Zielbeschreibung auf seiner Datenbank, findet "Braunschweig, Bahnhofstrasse" und "Braunsdorf, Bahnhofsallee" und sendet diese Ziele zusammen mit seiner Anbieterkennung "SP-001" und den auf Basis der Entfernung errechneten Preis von DM 1,50 sowie DM 2,00 zurück an das Endgerät (13).

Der Nutzer bestätigt daraufhin am Endgerät (14), dass er nach Braunschweig fahren will und dass er bereit ist, die geforderten DM 1,50 zu bezahlen, woraufhin das Gerät eine Zahlungsanweisung mit dem folgenden Inhalt erstellt und signiert:
- Nutzer-Mobilfunk Nummer: +49 01 23456789,
- Preis: DM 1,50,
- Empfänger: "SP-001"
- Zeitstempel: "14.12.2001 14:23".

Diese lesbaren Informationen werden signiert (Zahlungsanweisung-Scheck) und alles zusammen mit der Startund Zielkennung an den Diensteanbieter zurückgeschickt (15).

Da die Nachricht in lesbarer Form vorliegt (nur die Signatur ist verschlüsselt), kann der Diensteanbieter überprüfen, dass er der Empfänger des korrekten Betrages ist (16). Er leitet diese Zahlungsanweisung an den Diensteabrechner als Buchungsanfrage weiter (17) und beginnt währenddessen mit der Routenberechnung (18). Da das Endgerät eine begrenzte Speichergröße besitzt, wird nur ein Teilroute bis Groß Lafferde berechnet.

Nachdem der Diensteabrechner BP die erfolgreiche Buchung und damit die Echtheit der Zahlungsanweisung (Scheck) bestätigt hat (19, 20), sendet der Diensteanbieter die Routendaten (21) zusammen mit einem verschlüsselten Ticket (22) ({+490123456789, 15.12.2001, 14:23, BS-768124, DM 0,00} Key_{SP}), welches dem Nutzer die kostenfreie Routenberechnung nach Braunschweig innerhalb der nächsten 24 Stunden garantiert, zurück an das Gerät, worauf dieses mit der Zielführung (23) beginnt.

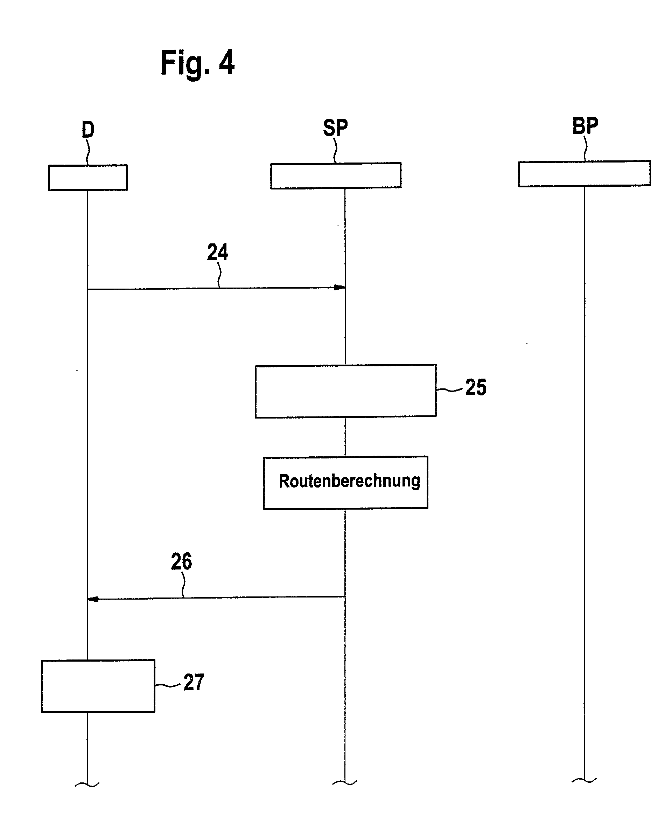

In Hildesheim, kurz vor Erreichen des Zwischenziels, stellt das Gerät automatisch eine neue Routenanfrage/Routenanfrage (24) zum ursprünglichen Zielpunkt an den Diensteanbieter mit Preisangabe DM 0,00 und dem zuvor erhaltenen Ticket, vergleiche Figur 4. Nach Überprüfung der Angaben im Ticket 25 schickt der Diensteanbieter, ohne dass eine Buchung stattfindet, die zweite Teilroute bis Braunschweig an das Gerät zurück (26) und der Nutzer wird ans Ziel geleitet (27).

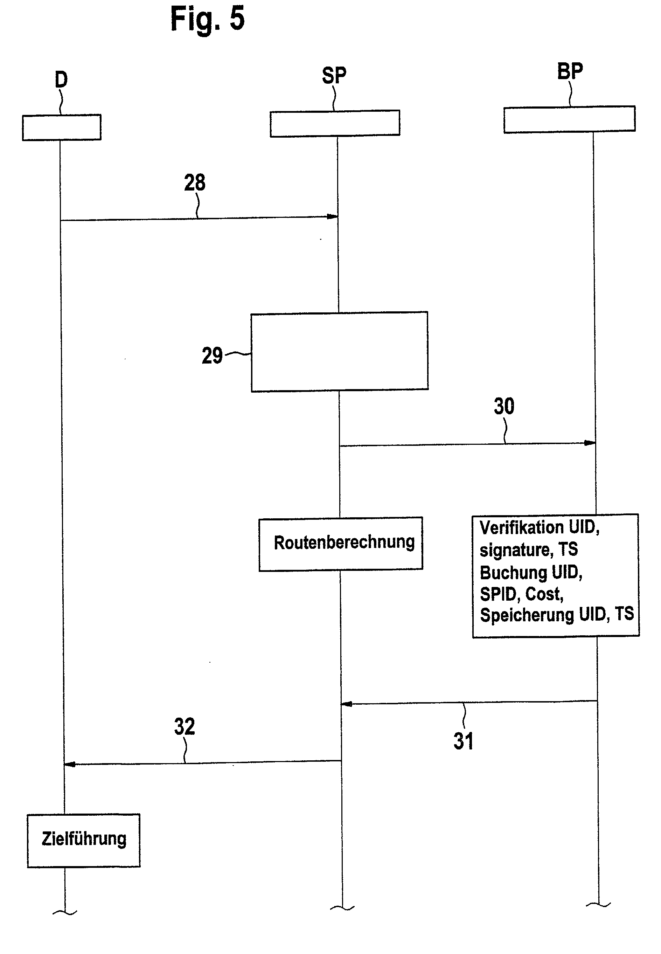

Der Nutzer aus vorgenanntem Beispiel stellt in einer Alternativlösung gemäß Figur 5 eine Routenanfrage an einen Diensteanbieter, der ein anderes Preismodell benutzt. Für die komplette Route zahlt er DM 1,00 und bekommt ein Ticket (29) ({+490123456789, 16.12.2001, 16:13, HH-768124, DM 0,50} Key_{SP}), welches verbilligte Folgeanfragen zum gleichen Ziel zulässt.

Aufgrund einer Baustelle auf halber Strecke verlässt der Nutzer die vorgeschlagene Route, so dass das Gerät keine weitere Zielführung leisten kann. Der Nutzer entschließt sich zu einer Neuanfrage unter Umgehung dieser Baustelle zum ursprünglichen Ziel. Dazu sendet das Gerät zusätzlich zur Zahlungsanweisung über DM 0,50 das vorher erhaltene Ticket. Der Diensteanbieter kann anhand dieses Tickets die Berechtigung zu einer ermäßigten Dienstenutzung überprüfen, leitet die Buchung ein (30, 31) und sendet die Alternativroute (32) zum Nutzer D zurück.

## Patentansprüche

1. Verfahren zur Bereitstellung von Diensten eines Diensteanbieters mit folgenden Schritten:
- ein Nutzer (D) sendet eine Diensteanfrage (1) an einen Diensteanbieter (SP),
- der Diensteanbieter (SP) sendet daraufhin ein Diensteangebot (2),
- der Nutzer (D) bestätigt (3) das Diensteangebot und sendet bei Akzeptanz eine Zahlungsanweisung an den Diensteanbieter (SP), die die nachfolgenden Informationen enthält: Nutzerkennung (UID), Preis des Diensteangebots (COST), Auftragskennung (TS), sowie gegebenenfalls eine Diensteanbieterkennung (SPID), wobei zumindest einige dieser vorgenannten Informationen vom Nutzer (D) digital signiert werden,
- der Diensteanbieter (SP) überprüft, ob die Zahlungsanweisung den richtigen Preis für das Diensteangebot (Cost) und die Diensteanbieterkennung (SPID) enthält und reicht sie an einen Diensteabrechner (BP) weiter,
- der Diensteabrechner (BP) überprüft die Zahlungsanweisung, insbesondere durch Dechiffrierung der digitalen Signatur, und meldet eine erfolgte Buchung an den Diensteanbieter (SP), welcher daraufhin den angeforderten Dienst dem Nutzer (D) zur Verfügung stellt.

2. Verfahren nach Anspruch 1, **dadurch gekennzeichnet, dass** für die Bereitstellung der Dienste kein direktes Vertragsverhältnis zwischen Nutzer (D) und Diensteanbieter (SP) besteht, sondern zwischen Nutzer (D) und Diensteabrechner (BP) sowie zwischen Diensteanbieter (SP) und Diensteabrechner (BP).

3. Verfahren nach Anspruch 1 oder 2, **dadurch gekennzeichnet, dass** mit dem Diensteangebot ein sogenanntes Ticket vom Diensteanbieter (SP) an den Nutzer (D) übermittelt wird, das der Nutzer (D) bei Folgeanfragen zurückschickt, um ein bestimmtes Diensteprofil und/oder eine Preisermäßigung für die erneute Inanspruchnahme der Dienste des Diensteanbieters (SP) zu erhalten.

4. Verfahren nach Anspruch 3, **dadurch gekennzeichnet, dass** das Ticket vom Diensteanbieter (SP) verschlüsselt oder auf andere Weise gegen Manipulation gesichert wird, so dass nur er die Daten erzeugen und lesen kann.

5. Verfahren nach einem der Ansprüche 1 bis 4, **dadurch gekennzeichnet, dass** als Auftragskennung mindestens Zeit und Datum der Erstellung gewählt wird.

6. Verfahren nach Anspruch 5, **dadurch gekennzeichnet, dass** für die Auftragskennung eine Gültigkeitsdauer vereinbart wird.

7. Verfahren nach einem der Ansprüche 1 bis 6, **dadurch gekennzeichnet, dass** die dem Nutzer (D) zur Verfügung gestellten Daten für eine vorgegebene Zeit vom Diensteanbieter (SP) zwischengespeichert werden, damit sie dieser, insbesondere im Fall eines Übertragungsfehlers, kostenfrei nochmals anfordern kann.

8. Verfahren nach einem der Ansprüche 1 bis 7, **dadurch gekennzeichnet, dass** für die digitale Signierung beim Nutzer (D) ein Schlüsselpaar, bestehend aus einem öffentlichen Schlüssel und einem geheimen Schlüssel, insbesondere für eine asymmetrische Verschlüsselung generiert wird (9) und der öffentliche Schlüssel an den Diensteabrechner (BP) geschickt wird, damit dieser die Zahlungsanweisung entschlüsseln kann.

9. Verfahren nach einem der Ansprüche 1 bis 8, **dadurch gekennzeichnet, dass** bei einer Diensteanfrage (1) neben der Nutzerkennung (UID), dem angefragten Dienst und der Diensteanbieterkennung weitere Parameter, insbesondere geografische Position des Nutzers (D) übertragen werden.

10. Verfahren nach einem der Ansprüche 1 bis 9, **dadurch gekennzeichnet, dass** Diensteanbieter (SP) und Diensteabrechner (BP) identisch sind, so dass SPID eingespart werden kann.

11. Sende- und Empfangseinheit zur Bereitstellung von Diensten eines Diensteanbieters mit folgenden Merkmalen:
- einer nutzerseitigen Einrichtung zum Aussenden einer Diensteanfrage (1) eines Nutzers (D) an einen Diensteanbieter (SP),
- einer diensteanbieterseitigen Einrichtung zum Senden eines Diensteangebots (2),
- einer nutzerseitigen Einrichtung zur Bestätigung des Diensteangebots und bei Akzeptanz zur Erstellung und Aussendung einer Zahlungsanweisung an den Diensteanbieter (SP), die die nachfolgenden Informationen enthält: Nutzerkennung (UID), Preis des Diensteangebots (COST), Auftragskennung (TS) sowie gegebenenfalls eine Diensteanbieterkennung (SPID), wobei zumindest einige dieser vorgenannten Informationen vom Nutzer (D) digital signiert werden,
- eine diensteanbieterseitige Einrichtung zur Überprüfung, ob die Zahlungsanweisung den richtigen Preis für das Diensteangebot (COST) und die Diensteanbieterkennung (SPID) enthält und zur Weiterreichung der Zahlungsanweisung an einen Diensteabrechner (BP),
- diensteabrechnerseitige Mittel zur Überprüfung der Zahlungsanweisung, insbesondere durch Dechiffrierung der digitalen Signatur, und zur Meldung einer erfolgten Buchung an den Diensteanbieter (SP), welcher Mittel aufweist, um den angeforderten Dienst dem Nutzer (D) zur Verfügung zu stellen.

12. Sende- und Empfangseinheit nach Anspruch 12, **dadurch gekennzeichnet, dass** die Sende- und Empfangseinheit zur funktionsbasierten Übertragung eingerichtet ist.

13. Verwendung des Verfahrens nach einem der Ansprüche 1 bis 10 oder der Sende- und Empfangseinheit nach Anspruch 11 oder 12 für die Offboard-Navigation.
